# EUROPEAN PATENT APPLICATION

(11) **EP 4 166 328 A1**
(43) Date of publication of application: **19.04.2023**
(21) Application number: 21838546.6
(22) Date of filing: 11.06.2021
(51) Int. Cl.: B32B 27/10, B32B 9/00, B32B 15/08, B32B 27/32, B65D 65/40

(54) **GAS-BARRIER LAYERED BODY AND PACKAGING BAG**

(30) Priority: 09.07.2020 JP 2020118629
(71) Applicant: TOPPAN INC., Tokyo 110-0016 (JP)
(72) Inventor: KOJIMA Yumiko, Tokyo 110-0016 (JP); KAMINAGA Junichi, Tokyo 110-0016 (JP); KOSHIYAMA Yoshiki, Tokyo 110-0016 (JP); ISHII Rika, Tokyo 110-0016 (JP)
(74) Representative: TBK
(86) International application number: PCT/JP2021/022371
(87) International publication number: WO 2022/009609

(57) **Abstract**

Provided is a gas barrier laminate including: a paper substrate; an anchor coat layer including a first polyolefin having a polar group; a vapor-deposited layer; and an overcoat layer including a second polyolefin having a polar group, in order.

## Description

### Technical Field

The present invention relates to a gas barrier laminate and a packaging bag.

### Background Art

In many fields such as foods, beverages, pharmaceuticals, and chemicals, various packaging materials are used according to the contents of each product. Packaging materials are required to have properties for preventing transmission of oxygen, water vapor, and the like (gas barrier properties), which cause degeneration of the contents.

In recent years, in view of growing environmental awareness stemming from marine plastic debris problems and the like, the momentum toward plastic reduction is building up. From the viewpoint of reducing the amount of use of plastic materials, it has been investigated to use paper instead of plastic materials in a variety of fields. For example, in the following Patent Literature 1, a gas barrier laminate in which barrier layers are laminated on paper is disclosed.

### Citation List

### Patent Literature

Patent Literature 1: Japanese Unexamined Patent Publication No. 2020-69783

### Summary of Invention

### Technical Problem

Since paper has crease retaining properties (also referred to as dead holding properties), paper has a feature that processing is easy. However, according to an investigation of the inventors of the present invention, it has been found that in a case where packaging bags having more acute-angled creases (pillow packaging, three-sided seal packaging, and gusset packaging) are used, there is still room for improvement from the viewpoint that cracks are generated in the barrier layer so that the gas barrier properties are deteriorated.

Furthermore, from the viewpoint of the Law for Promotion of Effective Utilization of Resources, it has been required to reduce the amount of use of plastic materials even in gas barrier laminates.

The present invention was achieved in view of the above-described circumstances, and it is an object of the invention to provide a gas barrier laminate that has crease retaining properties, which is a feature of paper, has sufficient gas barrier properties even after being folded, and contributes to a reduction in the amount of use of plastic materials, and to provide a packaging bag including this gas barrier laminate.

### Solution to Problem

The present invention provides a gas barrier laminate including: a paper substrate; an anchor coat layer including a first polyolefin having a polar group; a vapor-deposited layer; and an overcoat layer including a second polyolefin having a polar group, in order.

The first polyolefin having a polar group may have at least one selected from a carboxyl group, a salt of a carboxyl group, a carboxylic acid anhydride group, and a carboxylic acid ester.

The second polyolefin having a polar group may have at least one selected from a carboxyl group, a salt of a carboxyl group, a carboxylic acid anhydride group, and a carboxylic acid ester.

The first polyolefin having a polar group may be a copolymer of an acrylic acid ester and maleic anhydride.

The first polyolefin having a polar group may be an ethylene-vinyl acetate copolymer.

The first polyolefin having a polar group may be an ethylene-glycidyl methacrylate copolymer.

The second polyolefin having a polar group may be a copolymer of an acrylic acid ester and maleic anhydride.

The second polyolefin having a polar group may be an ethylene-vinyl acetate copolymer.

The second polyolefin having a polar group may be an ethylene-glycidyl methacrylate copolymer.

A thickness of the anchor coat layer may be 1 µm or more.

A weight of paper may be 50% by mass or more based on the entire gas barrier laminate.

The present invention also provides a packaging bag including the above-described gas barrier laminate according to the present invention.

The packaging bag may have a crease.

### Advantageous Effects of Invention

According to the present invention, a gas barrier laminate that has crease retaining properties, which is a feature of paper, has sufficient gas barrier properties even after being folded, and contributes to a reduction in the amount of use of plastic materials, and a packaging bag including this gas barrier laminate can be provided.

### Brief Description of Drawings

FIG. 1 is a schematic cross-sectional view illustrating a gas barrier laminate according to an embodiment of the present invention.
FIG. 2 is a perspective view illustrating a packaging bag according to an embodiment of the present invention.

### Description of Embodiments

Hereinafter, embodiments of the present invention will be described in detail with reference to the drawings as necessary. However, the present invention is not intended to be limited to the following embodiments.

### <Gas barrier laminate>

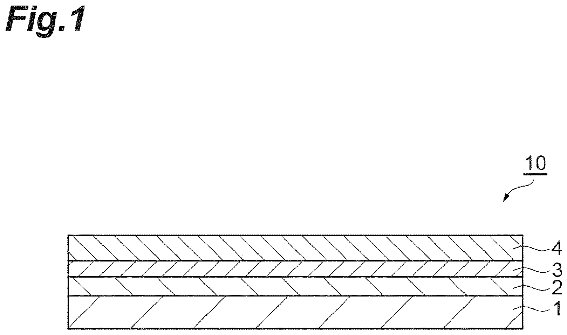

FIG. 1 is a schematic cross-sectional view illustrating a gas barrier laminate according to an embodiment. A gas barrier laminate 10 according to an embodiment includes a paper substrate 1, an anchor coat layer 2, a vapor-deposited layer 3, and an overcoat layer 4, in order. The anchor coat layer 2 includes a first polyolefin having a polar group, and the overcoat layer 4 includes a second polyolefin having a polar group.

### [Paper substrate]

The paper substrate 1 is not particularly limited and may be appropriately selected according to the use application of the packaging bag to which the gas barrier laminate 10 is applied. The paper substrate 1 is not particularly restricted as long as it is a paper containing plant-derived pulp as a main component. Specific examples of the paper substrate 1 include high-quality paper, special high-quality paper, coated paper, art paper, cast coated paper, imitation vellum paper, kraft paper, and glassine paper. The thickness of the paper substrate 1 may be, for example, 20 to 500 g/m² or 30 to 100 g/m².

The paper substrate 1 may be provided with at least a coat layer on the side that is in contact with the anchor coat layer 2 that will be described below. By providing a coat layer, the anchor coat layer 2 can be prevented from sinking into the paper, and the coat layer can accomplish a role of a sealer embedding the surface unevenness of the paper so that the anchor coat layer can be uniformly formed without defects. In the coat layer, for example, various copolymers such as a styrene-butadiene-based copolymer, a styrene-acrylic copolymer, and an ethylene-vinyl acetate-based copolymer; a polyvinyl alcohol-based resin, a cellulose-based resin, and paraffin (WAX) are used as binder resins, and clay, kaolin, calcium carbonate, talc, and mica may be included as fillers.

The thickness of the coat layer is not particularly restricted; however, the thickness may be, for example, 1 to 10 µm or 3 to 8 µm.

The weight of the paper is preferably 50% by mass or more, more preferably 70% by mass or more, and even more preferably 80% by mass or more, based on the entire gas barrier laminate. When the weight of the paper is 50% by mass or more based on the entire gas barrier laminate, the amount of use of plastic materials can be sufficiently reduced, the gas barrier laminate can be said to be made of paper on the whole, and at the same time, excellent recyclability is obtained.

### [Anchor coat layer]

The anchor coat layer 2 is provided on the surface of the paper substrate and is provided for the purpose of improving the adhesiveness between the paper substrate 1 and the vapor-deposited layer 3 that will be described below or improving the gas barrier properties of the gas barrier laminate. The anchor coat layer 2 includes a first polyolefin having a polar group. Such an anchor coat layer 2 has excellent pliability, can suppress cracks in the vapor-deposited layer that will be described below after bending (after folding), and can also improve the adhesiveness between the anchor coat layer and the vapor-deposited layer. In addition, by including a polyolefin having a polar group, it is possible to form a dense film due to the crystallinity of the polyolefin, and water vapor barrier properties are exhibited. Water vapor barrier properties are exhibited due to the crystallinity of the polyolefin, and adhesion to the vapor-deposited layer is exhibited due to the presence of polar groups.

The first polyolefin having a polar group may have at least one selected from a carboxyl group, a salt of a carboxyl group, a carboxylic acid anhydride group, and a carboxylic acid ester.

As the first polyolefin having a polar group, a product obtained by copolymerizing ethylene or propylene with an unsaturated carboxylic acid (an unsaturated compound having a carboxyl group, such as acrylic acid, methacrylic acid, or maleic anhydride) or an unsaturated carboxylic acid ester, a salt obtained by neutralizing a carboxylic acid with a basic compound, and the like may be used, and in addition to those, products copolymerized with vinyl acetate, an epoxy-based compound, a chlorine-based compound, a urethane-based compound, a polyamide-based compound, and the like may also be used.

Specific examples of the first polyolefin having a polar group include a copolymer of an acrylic acid ester and maleic anhydride, an ethylene-vinyl acetate copolymer, and an ethylene-glycidyl methacrylate copolymer.

The anchor coat layer 2 may include other components in addition to the first polyolefin. Examples of the other components include a polyolefin other than the above-described first polyolefin, a silane coupling agent, an organic titanate, a polyacrylic, a polyester, a polyurethane, a polycarbonate, a polyurea, a polyamide, a polyimide, melamine, and phenol.

The content of the first polyolefin in the anchor coat layer 2 may be, for example, 50% by mass or more, may be 70% by mass or more, may be 90% by mass or more, or may be 100% by mass.

The thickness of the anchor coat layer 2 may be, for example, 1 µm or more, may be 2 µm or more, may be 20 µm or less, may be 10 µm or less, and may be 5 µm or less. When the thickness of the anchor coat layer 2 is 1 µm or more, surface unevenness of the above-mentioned paper substrate can be efficiently embedded, and the vapor-deposited layer that will be described below can be uniformly laminated. Furthermore, when the thickness of the anchor coat layer 2 is 20 µm or less, the vapor-deposited layer can be uniformly laminated while the cost is lowered.

Examples of the solvent that is included in the coating liquid for the anchor coat layer 2 include water, methyl alcohol, ethyl alcohol, isopropyl alcohol, n-propyl alcohol, n-butyl alcohol, n-pentyl alcohol, dimethyl sulfoxide, dimethylformamide, dimethylacetamide, toluene, hexane, heptane, cyclohexane, acetone, methyl ethyl ketone, diethyl ether, dioxane, tetrahydrofuran, ethyl acetate, and butyl acetate. Regarding these solvents, one kind thereof may be used alone, or two or more kinds thereof may be used in combination. Among these, from the viewpoint of characteristics, methyl alcohol, ethyl alcohol, isopropyl alcohol, toluene, ethyl acetate, methyl ethyl ketone, and water are preferable. Furthermore, from an environmental viewpoint, methyl alcohol, ethyl alcohol, isopropyl alcohol, and water are preferable.

Regarding a method for providing the anchor coat layer 2, the anchor coat layer 2 can be obtained by applying a coating liquid that includes the above-mentioned first polyolefin and a solvent on a paper substrate and drying the coating liquid. With regard to the first polyolefin in the coating liquid, from the viewpoint of preventing blocking, a polyolefin having a larger particle size is preferred so that the contact area is smaller. Although it is not particularly limited, the particle size may be specifically 1 nm or more, may be 0.1 µm or more, and may be 1 µm or less, 0.7 µm or less, or 0.5 µm or less.

### [Vapor-deposited layer]

The vapor-deposited layer 3 is a layer produced by vapor-depositing a metal or an inorganic compound. The vapor-deposited layer may be a layer obtained by vapor-depositing aluminum or may also include aluminum oxide (AlOₓ), silicon oxide (SiOₓ), and the like.

The thickness of the vapor-deposited layer 3 may be appropriately set according to the use application; however, the thickness is preferably 10 to 300 nm, and more preferably 30 to 100 nm. When the thickness of the vapor-deposited layer 3 is set to be 10 nm or more, sufficient continuity of the vapor-deposited layer 3 is likely to be obtained, and when the thickness is set to be 300 nm or less, generation of curls and cracks can be sufficiently suppressed, while sufficient gas barrier performance and flexibility are likely to be achieved.

It is preferable that the vapor-deposited layer 3 is formed by a vacuum film-forming means, from the viewpoints of oxygen gas barrier performance and film uniformity. Examples of the film-forming means include known methods such as a vacuum vapor deposition method, a sputtering method, and a chemical vapor deposition method (CVD method); however, from the viewpoint that the film-forming rate is fast and productivity is high, a vacuum vapor deposition method is preferable. Furthermore, among vacuum vapor deposition methods, particularly a film-forming means by electron beam heating is effective from the viewpoint that the film-forming rate is easily controlled by the area of irradiation, the electron beam current, and the like, and that temperature increase and temperature decrease to the vapor deposition material can be carried out in a short period of time.

### [Overcoat layer]

The overcoat layer 4 is provided on the surface of the vapor-deposited layer 3 so as to be in contact with the vapor-deposited layer 3 and includes a second polyolefin having a polar group.

The second polyolefin having a polar group may have at least one selected from a carboxyl group, a salt of a carboxyl group, a carboxylic acid anhydride group, and a carboxylic acid ester.

As the second polyolefin having a polar group, a product obtained by copolymerizing ethylene or propylene with an unsaturated carboxylic acid (an unsaturated compound having a carboxyl group, such as acrylic acid or methacrylic acid) or an unsaturated carboxylic acid ester, a salt obtained by neutralizing a carboxylic acid with a basic compound, or the like may be used, and in addition to those, products copolymerized with vinyl acetate, an epoxy-based compound, a chlorine-based compound, a urethane-based compound, a polyamide-based compound, with the like may also be used.

As the second polyolefin having a polar group, specifically, a copolymer of an acrylic acid ester and maleic anhydride, an ethylene-vinyl acetate copolymer, an ethylene-glycidyl methacrylate copolymer, and the like may be mentioned.

Such an overcoat layer 4 has excellent pliability, can suppress cracks in the vapor-deposited layer after bending (after folding), and at the same time, has excellent adhesiveness to the vapor-deposited layer. In addition, by including the above-mentioned second polyolefin, it is possible to form a dense film due to the crystallinity of the polyolefin, and the water vapor barrier properties are exhibited. Furthermore, since the overcoat layer 4 can also take a role as a heat seal layer by including the above-described second polyolefin, it is not necessary to provide a heat seal layer separately.

The overcoat layer 4 may include other components in addition to the second polyolefin. Examples of the other components include a silane coupling agent, an organic titanate, a polyacrylic, a polyester, a polyurethane, a polycarbonate, a polyurea, a polyamide, a polyolefin-based emulsion, a polyimide, melamine, and phenol.

The content of the second polyolefin in the overcoat layer 4 may be, for example, 50% by mass or more, may be 70% by mass or more, may be 90% by mass or more, or may be 100% by mass.

The thickness of the overcoat layer 4 may be, for example, 0.05 µm or more, may be 0.5 µm or more, may be 1 µm or more, may be 20 µm or less, may be 10 µm or less, or may be 5 µm or less. When the thickness of the overcoat layer 4 is 0.05 µm or more, the role as the above-mentioned heat seal layer can be sufficiently exhibited. Furthermore, when the thickness of the overcoat layer 4 is 20 µm or less, the adhesiveness to the vapor-deposited layer and the barrier properties can be sufficiently exhibited while the cost is suppressed.

Examples of the solvent that is included in the coating liquid for the overcoat layer 4 include water, methyl alcohol, ethyl alcohol, isopropyl alcohol, n-propyl alcohol, n-butyl alcohol, n-pentyl alcohol, dimethyl sulfoxide, dimethylformamide, dimethylacetamide, toluene, hexane, heptane, cyclohexane, acetone, methyl ethyl ketone, diethyl ether, dioxane, tetrahydrofuran, ethyl acetate, and butyl acetate. Regarding these solvents, one kind thereof may be used alone, or two or more kinds thereof may be used in combination. Among these, from the viewpoint of characteristics, methyl alcohol, ethyl alcohol, isopropyl alcohol, toluene, ethyl acetate, methyl ethyl ketone, and water are preferable. Furthermore, from an environmental viewpoint, methyl alcohol, ethyl alcohol, isopropyl alcohol, and water are preferable. Regarding a method for providing the overcoat layer 4, the overcoat layer 4 can be obtained by applying a coating liquid including the above-mentioned second polyolefin and a solvent on the vapor-deposited layer and drying the coating liquid. The melting point of the second polyolefin in the coating liquid is preferably 70°C to 160°C, and more preferably 80°C to 120°C. When the melting point of the second polyolefin is low, there is an advantage that the initial rise temperature at the time of heat sealing can be lowered. When the melting point of the second polyolefin is high, there is a high risk that blocking may occur in a high temperature environment. Incidentally, from the viewpoint of preventing blocking, a polyolefin having a larger particle size is preferred so that the contact area is smaller. Although it is not particularly limited, the particle size may be specifically 1 nm or more, may be 0.1 µm or more, and may be 1 µm or less, 0.7 µm or less, or 0.5 µm or less.

The first polyolefin and the second polyolefin, which are included in the anchor coat layer 2 and the overcoat layer 4, respectively, may be of the same type or may be of different types; however, when the ease of production and the like are considered, it is preferable that the first polyolefin and the second polyolefin are each of the same type.

### <Packaging bag>

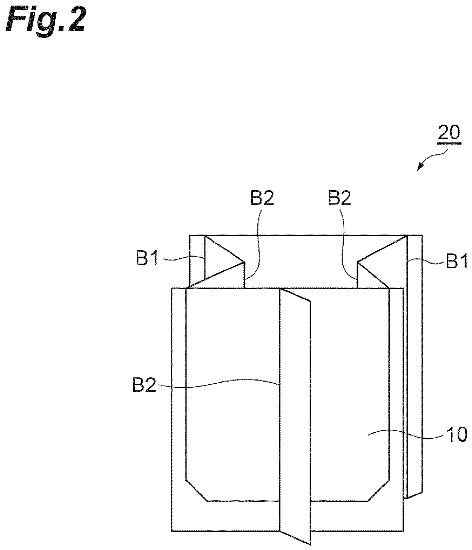

FIG. 2 is a perspective view illustrating a gusset bag 20 formed from the gas barrier laminate 10. A packaging bag is produced by sealing an opening part in the upper part of the gusset bag 20. The gusset bag 20 has a site where the gas barrier laminate 10 is folded (folding parts B1 and B2). A folding part B1 is a site where the gas barrier laminate 10 is valley-folded as viewed from the innermost layer side, and a folding part B2 is a site where the gas barrier laminate 10 is mountain-folded as viewed from the innermost layer side.

The packaging bag may be formed into a bag shape by folding one sheet of a gas barrier laminate in two such that the two parts of the overcoat layer 4 face each other, subsequently appropriately folding the gas barrier laminate into a desired shape, and then heat-sealing the resultant, or may be formed into a bag shape by superposing two sheets of a gas barrier laminate such that the overcoat layers 4 face each other, and then heat-sealing the gas barrier laminates.

With regard to the packaging bag according to the present embodiment, the heat seal strength may be 2 N or greater or may be 4 N or greater. Incidentally, the upper limit value of the heat seal strength is not particularly limited; however, the upper limit value may be, for example, 10 N or less.

The packaging bag can accommodate contents such as foods and medicines as contents. Particularly, the packaging bag is suitable for accommodating confectionery and the like as foods. The packaging bag according to the present embodiment can maintain high gas barrier properties even when the packaging bag has a shape with folding parts.

Incidentally, in the present embodiment, a gusset bag has been mentioned as an example of the packaging bag; however, the gas barrier laminate according to the present embodiment may also be used to produce, for example, a pillow bag, a three-sided sealed bag, or a standing pouch.

### Examples

Hereinafter, the present invention will be described in more detail by way of Examples; however, the present invention is not intended to be limited to these examples.

### <Production of gas barrier laminate>

### (Example 1)

A coating liquid including a salt of a carboxyl group (trade name: CHEMIPEARL S100, ionomer-based, particle size: < 0.1 µm, solvent: water, IPA, manufactured by Mitsui Chemicals, Inc.) was applied on the surface of paper (coated paper, 55 g/m²) with a bar coater and was dried in an oven to form an anchor coat layer. The thickness of the layer was 3 µm. Subsequently, AL vapor deposition was applied on the anchor coat layer. The thickness of the AL vapor-deposited layer was 50 nm. Thereafter, a solution including a salt of a carboxyl group (trade name: CHEMIPEARL S100, ionomer-based, particle size: < 0.1 µm, solvent: water, IPA, manufactured by Mitsui Chemicals, Inc.) was applied on the vapor-deposited layer with a bar coater and was dried in an oven to form an overcoat layer, and a gas barrier laminate was obtained. The thickness of the overcoat layer was 3 µm. The weight of paper in the gas barrier laminate was about 82% by mass.

### (Example 2)

A gas barrier laminate was obtained by an operation similar to that in Example 1, except that the anchor coat layer was formed with a solution including a salt of a carboxyl group (trade name: CHEMIPEARL S300, ionomer-based, particle size: 0.5 µm, solvent: water, IPA, manufactured by Mitsui Chemicals, Inc.). The weight of paper in the gas barrier laminate was about 82% by mass.

### (Example 3)

A gas barrier laminate was obtained by an operation similar to that in Example 1, except that the anchor coat layer was formed with a solution including a salt of a carboxyl group (trade name: CHEMIPEARL S500, ionomer-based, particle size: 0.7 µm, solvent: water, IPA, manufactured by Mitsui Chemicals, Inc.). The weight of paper in the gas barrier laminate was about 82% by mass.

### (Example 4)

A gas barrier laminate was obtained by an operation similar to that in Example 1, except that the thickness of the anchor coat layer was set to 1 µm. The weight of paper in the gas barrier laminate was about 85% by mass.

### (Example 5)

A gas barrier laminate was obtained by an operation similar to that in Example 1, except that the vapor-deposited layer was formed with silica. The weight of paper in the gas barrier laminate was about 82% by mass.

### (Example 6)

A gas barrier laminate was obtained by an operation similar to that in Example 1, except that the vapor-deposited layer was formed with alumina. The weight of paper in the gas barrier laminate was about 82% by mass.

### (Example 7)

BONDINE HX-8290 (trade name: manufactured by Arkema S.A.), which is a copolymer of an acrylic acid ester and maleic anhydride, was neutralized with triethylamine in a water/IPA mixed solvent to prepare an aqueous polyolefin dispersion. Incidentally, maleic anhydride is partially or entirely ring-opened in an aqueous solvent to form a carboxylic acid but is partially or entirely dehydrated and cyclized again after drying.

The aqueous polyolefin dispersion prepared as described above was applied on the surface of paper (coated paper, 55 g/m²) and dried in an oven to form an anchor coat layer. The thickness of the anchor coat layer was 3 µm. Subsequently, AL vapor deposition was applied on the anchor coat layer. The thickness of the AL vapor-deposited layer was 50 nm. Thereafter, the above-described aqueous polyolefin dispersion was applied on the vapor-deposited layer and dried in an oven to form an overcoat layer, and a gas barrier laminate was obtained. The thickness of the overcoat layer was 3 µm. The weight of paper in the gas barrier laminate was about 82% by mass.

### (Example 8)

A gas barrier laminate was obtained by an operation similar to that in Example 1, except that the anchor coat layer was formed with an ethylene-vinyl acetate copolymer (trade name: CHEMIPEARL V300, particle size: 6 µm, solvent: water, IPA, manufactured by Mitsui Chemicals, Inc.). The weight of paper in the gas barrier laminate was about 82% by mass.

### (Example 9)

A gas barrier laminate was obtained by an operation similar to that in Example 1, except that the overcoat layer was formed with CHEMIPEARL V300. The weight of paper in the gas barrier laminate was about 82% by mass.

### (Example 10)

A gas barrier laminate was obtained by an operation similar to that in Example 1, except that the anchor coat layer was formed with an ethylene-glycidyl methacrylate copolymer (trade name: SEPOLSION G515, manufactured by Sumitomo Seika Chemicals Company, Limited.). The weight of paper in the gas barrier laminate was about 82% by mass.

### (Example 11)

A gas barrier laminate was obtained by an operation similar to that in Example 1, except that the overcoat layer was formed with an ethylene-glycidyl methacrylate copolymer (trade name: SEPOLSION G515, manufactured by Sumitomo Seika Chemicals Company, Limited.). The weight of paper in the gas barrier laminate was about 82% by mass.

### (Example 12)

An aqueous solution of PVA was applied on the surface of paper (coated paper, 55 g/m²) and dried to form a first anchor coat layer. The thickness of the first anchor coat layer was 3 µm. Next, a second anchor coat layer formed with CHEMIPEARL S100 was formed. The thickness of the second anchor coat layer was 1 µm. A gas barrier laminate was obtained by an operation similar to that in Example 1, except for the above. The weight of paper in the gas barrier laminate was about 81% by mass.

### (Example 13)

An anchor coat layer was formed with CHEMIPEARL S100 (thickness: 3 µm), a vapor-deposited layer was laminated, and subsequently an anchor coat layer was formed with CHEMIPEARL S100 was formed (thickness: 3 µm), and a vapor-deposited layer was laminated. A gas barrier laminate was obtained by an operation similar to that in Example 1, except for the above. The weight of paper in the gas barrier laminate was about 81% by mass.

### (Comparative Example 1)

A gas barrier laminate was obtained by an operation similar to that in Example 1, except that the anchor coat layer was formed with a urethane-curable acrylic resin, which is a cured product of an acrylic polyol (acrylic polyol is a polymerization product of an acrylic acid derivative monomer or a polymer of an acrylic acid derivative monomer and another monomer and has hydroxyl groups at the ends) and a polyisocyanate. The weight of paper in the gas barrier laminate was about 82% by mass.

### (Comparative Example 2)

A gas barrier laminate was obtained by an operation similar to that in Example 1, except that the overcoat layer was formed with a mixture of PVA and hydrolysate of TEOS, and 3 µm of CHEMIPEARL S500 was applied as a heat seal layer on the overcoat layer. The weight of paper in the gas barrier laminate was about 82% by mass.

### <Measurement of water vapor transmission rate>

The water vapor transmission rates of the gas barrier laminates according to Examples and Comparative Examples were measured by a MOCON method. The measurement conditions were set to a temperature of 40°C and a relative humidity of 90%. A gas barrier laminate was creased while a roller weighing 600 g was rolled at a rate of 300 mm/min, and the water vapor transmission rate of the gas barrier laminate after opening was also similarly measured. Incidentally, the term "valley-folding" in Table 1, Table 2, and Table 3 indicates the water vapor transmission rate after valley-folding the gas barrier laminate as viewed from the overcoat layer side, and the term "mountain-folding" indicates the water vapor transmission rate after mountain-folding the gas barrier laminate as viewed from the overcoat layer side. The results are expressed in the unit of [g/m²·day] in Table 1, Table 2, and Table 3.

### <Measurement of heat seal strength>

Two sheets of a gas barrier laminate were combined such that the overcoat layers 4 faced each other, and were thermocompression-bonded with a heat sealing bar under the conditions of 120°C, 0.2 MPa, and 1 second. The thermocompression-bonded part was cut out to a width of 15 mm, and the strength when the specimen was subjected to T-shape peeling with a tensile testing machine was recorded. The peeling rate was set to 300 mm/min. The results are expressed in the unit of [N/15 mm] in Table 1, Table 2, and Table 3.

**[Table 1]**

| | | Example 1 | Example 2 | Example 3 | Example 4 | Example 5 |
|---|---|---|---|---|---|---|
| Paper substrate | | Clay-coated paper | Clay-coated paper | Clay-coated paper | Clay-coated paper | Clay-coated paper |
| Anchor coat layer | Material | CHEMIPEARL S100 | CHEMIPEARL S300 | CHEMIPEARL S500 | CHEMIPEARL S100 | CHEMIPEARL S100 |
| | Particle size (µm) | 0.1 | 0.5 | 0.7 | 0.1 | 0.1 |
| | Thickness (µm) | 3 | 3 | 3 | 1 | 3 |
| Vapor-deposited layer | | AL | AL | AL | AL | Silica |
| Overcoat layer | Material | CHEMIPEARL S100 | CHEMIPEARL S100 | CHEMIPEARL S100 | CHEMIPEARL S100 | CHEMIPEARL S100 |
| | Particle size (µm) | 0.1 | 0.1 | 0.1 | 0.1 | 0.1 |
| | Thickness (µm) | 3 | 3 | 3 | 3 | 3 |
| Water vapor transmission rate | Initial | 1.8 | 1.9 | 2.5 | 3.8 | 1.9 |
| | Valley-folding | 1.8 | 2.1 | 2.6 | 3.9 | 2.2 |
| | Mountain-folding | 3.3 | 3.6 | 3.8 | 5.1 | 3.7 |
| Heat seal strength | | 4.2 | 4.0 | 4.1 | 4.1 | 4.0 |

**[Table 2]**

| | | Example 6 | Example 7 | Example 8 | Example 9 | Example 10 |
|---|---|---|---|---|---|---|
| Paper substrate | | Clay-coated paper | Clay-coated paper | Clay-coated paper | Clay-coated paper | Clay-coated paper |
| Anchor coat layer | Material | CHEMIPEARL S100 | BONDINE HX-8290 | CHEMIPEARL V300 | CHEMIPEARL S100 | SEPOLSION G515 |
| | Particle size (µm) | 0.1 | 0.1 | 6 | 0.1 | 1.5 |
| | Thickness (µm) | 3 | 3 | 3 | 3 | 3 |
| Vapor-deposited layer | | Alumina | AL | AL | AL | AL |
| Overcoat layer | Material | CHEMIPEARL S100 | BONDINE HX-8290 | CHEMIPEARL S100 | CHEMIPEARL V300 | CHEMIPEARL S100 |
| | Particle size (µm) | 0.1 | - | 0.1 | 6 | 0.1 |
| | Thickness (µm) | 3 | 3 | 3 | 3 | 3 |
| Water vapor transmission rate | Initial | 1.8 | 1.9 | 5.1 | 4.9 | 3.2 |
| | Valley-folding | 2.2 | 2.1 | 5.8 | 5.9 | 3.0 |
| | Mountain-folding | 3.5 | 3.6 | 7.1 | 8.2 | 7.1 |
| Heat seal strength | | 3.9 | 4.0 | 4.0 | 3.8 | 3.8 |

**[Table 3]**

| | | Example 11 | Example 12 | Example 13 | Comparative Example 1 | Comparative Example 2 |
|---|---|---|---|---|---|---|
| Paper substrate | | Clay-coated paper | Clay-coated paper | Clay-coated paper | Clay-coated paper | Clay-coated paper |
| Anchor coat layer | Material | CHEMIPEARL S100 | PVA | CHEMIPEARL S100 | Urethane-curable acrylic resin | CHEMIPEARL S100 |
| | Particle size (µm) | 0.1 | - | 0.1 | - | 0.1 |
| | Thickness (µm) | 3 | 3 | 3 | 3 | 3 |
| Anchor coat layer | Material | - | CHEMIPEARL S100 | CHEMIPEARL S100 | - | - |
| | Particle size (µm) | - | 0.1 | 0.1 | - | - |
| | Thickness (µm) | - | 1 | 1 | - | - |
| Vapor-deposited layer | | AL | AL | AL *1 | AL | AL |
| Overcoat layer | Material | SEPOLSION G515 | CHEMIPEARL S100 | CHEMIPEARL S100 | CHEMIPEARL S100 | PVA + TEOS hydrolysate |
| | Particle size (µm) | 1.5 | 0.1 | 0.1 | 0.1 | 0.1 |
| | Thickness (µm) | 3 | 3 | 3 | 3 | 3 |
| Heat seal layer | Material | - | - | - | - | CHEMIPEARL S500 |
| | Thickness (µm) | - | - | - | - | 3 |
| Water vapor transmission rate | Initial | 2.5 | 2.7 | 0.3 | 2.1 | 2.2 |
| | Valley-folding | 2.6 | 3.0 | 0.4 | 10.3 | 15.8 |
| | Mountain-folding | 8.9 | 3.5 | 0.4 | 20.9 | 29.4 |
| Heat seal strength | | 1.2 | 4.7 | 4.1 | 3.8 | 3.9 |

| | | | | | | |
|---|---|---|---|---|---|---|
| * 1: The vapor-deposited layer is provided between two anchor coat layers and between the overcoat layer and an anchor coat layer. | | | | | | |

### Reference Signs List

1: paper substrate, 2: anchor coat layer, 3: vapor-deposited layer, 4: overcoat layer, 10: gas barrier laminate, 20: gusset bag, B1, B2: folding part.

## Claims

1. A gas barrier laminate comprising, in following order:
a paper substrate;
an anchor coat layer including a first polyolefin having a polar group;
a vapor-deposited layer; and
an overcoat layer including a second polyolefin having a polar group.

2. The gas barrier laminate according to claim 1, wherein the first polyolefin having a polar group has at least one selected from a carboxyl group, a salt of a carboxyl group, a carboxylic acid anhydride group, and a carboxylic acid ester.

3. The gas barrier laminate according to claim 1 or 2, wherein the second polyolefin having a polar group has at least one selected from a carboxyl group, a salt of a carboxyl group, a carboxylic acid anhydride group, and a carboxylic acid ester.

4. The gas barrier laminate according to claim 1, wherein the first polyolefin having a polar group is a copolymer of an acrylic acid ester and maleic anhydride.

5. The gas barrier laminate according to claim 1, wherein the first polyolefin having a polar group is an ethylene-vinyl acetate copolymer.

6. The gas barrier laminate according to claim 1, wherein the first polyolefin having a polar group is an ethylene-glycidyl methacrylate copolymer.

7. The gas barrier laminate according to any one of claims 1 to 6, wherein the second polyolefin having a polar group is a copolymer of an acrylic acid ester and maleic anhydride.

8. The gas barrier laminate according to any one of claims 1 to 6, wherein the second polyolefin having a polar group is an ethylene-vinyl acetate copolymer.

9. The gas barrier laminate according to any one of claims 1 to 6, wherein the second polyolefin having a polar group is an ethylene-glycidyl methacrylate copolymer.

10. The gas barrier laminate according to any one of claims 1 to 9, wherein a thickness of the anchor coat layer is 1 µm or more.

11. The gas barrier laminate according to any one of claims 1 to 10, wherein a weight of paper is 50% by mass or more based on the entire gas barrier laminate.

12. A packaging bag comprising the gas barrier laminate according to any one of claims 1 to 11.

13. The packaging bag according to claim 12, having a folding part.
